# EUROPEAN PATENT SPECIFICATION

(11) **EP 3 284 673 B1**
(45) Date of publication and mention of the grant of the patent: **17.03.2021**
(21) Application number: 16184421.2
(22) Date of filing: 17.08.2016
(51) Int. Cl.: B64D 11/00

(54) **OXYGEN SUPPLY SYSTEM**
SAUERSTOFFVERSORGUNGSANLAGE
SYSTÈME D'ALIMENTATION EN OXYGÈNE

(43) Date of publication of application: 21.02.2018
(73) Proprietor: Airbus Operations GmbH, 21129 Hamburg (DE)
(72) Inventor: JOEST, Henning, 21129 Hamburg (DE); KESTERNICH, Stefan, 21129 Hamburg (DE); RAMOS, Daniel, 25462 Rellingen (DE)

(56) References cited:
- EP-A2- 0 882 484
- US-A- 3 615 250
- US-A1- 2012 205 491
- US-A1- 2014 367 976

## Description

### FIELD OF THE INVENTION

The present invention pertains to oxygen supply systems, particularly for use in a passenger aircraft or a cargo aircraft.

### TECHNICAL BACKGROUND

Oxygen supply systems in aircraft are designed to store or to generate a supply of oxygen and to regulate, dilute as required, then distribute oxygen to crew or passengers. For passenger oxygen supply systems regulation and dilution is usually not performed. Oxygen supply systems may be installed in military aircraft, commercial aircraft and business aircraft. Depending on the type and the role of the aircraft, concerned oxygen supply systems may be used under normal operating conditions or under emergency or other extraordinary operating conditions to provide supplemental oxygen in specific flight situations.

Two different types of release mechanisms for oxygen supply equipment are commonly used, pneumatically operating release mechanisms or electrically operating release mechanisms. In order to ascertain correct functionality of the oxygen supply systems, a number of tests may be performed. During production of an aircraft, testing of oxygen supply systems is commonly performed at the manufacturer's site several times. During operation of the aircraft, maintenance related to oxygen supply systems in the cabin or to components in the vicinity of the oxygen supply systems will usually entail unscheduled tests to ensure that the oxygen supply systems have not been negatively impacted by the actions during maintenance. Moreover, further scheduled tests are periodically performed during the lifetime of the aircraft.

One of the testing procedures may involve each individual container for oxygen supply equipment being subject to a drop test. A simplification of the drop tests may involve the containers to be put manually in test position which will cause the containers to only open by a small gap in order to ensure operation in emergency. The drop test is not a functional test as the masks will not be fully deployed nor the oxygen flow started. Testing the ability to open the container may, however, under certain circumstances be considered to be sufficient to declare the oxygen supply system airworthy. After the drop test the containers have to be closed and put back into service condition manually. Depending on the layout of the aircraft cabin this might involve a considerable amount of time spent.

Document EP 0 882 484 A2 discloses an oxygen concentrator with adsorption beds' duty cycle control and self-test. Document US 2010/0012116 A1 discloses an oxygen breathing device having a built-in test feature for monitoring an oxygen performance of a filter unit. Document US 6,300,764 B1 discloses a squib fire network including built-in testing which is able to safely and efficiently verify the proper operational status of the squib fire network.

Document US 2012/0205491 A1 discloses an emergency oxygen device for an aircraft, including a controller adapted to receive a test signal for activating an activation device of the emergency oxygen device in a test case. The controller may include a signaling means, such as a light or a speaker, and in case the controller receiving the test signals, the controller may be adapted to set an energy storage device of the emergency oxygen device into communication with the signaling means.

US 3615250 A discloses an oxygen supply system comprising an hermetically sealed container having an outlet port; a fusible disc sealably located in said outlet port and responsive to the application of an electrical current therethrough to result in the fusing thereof and thereby leave said outlet port substantially unobstructed, a combustible oxygen-yielding composition located within said container and, electrical means for sequentially fusing said disc.

### SUMMARY OF THE INVENTION

One of the objects of the invention thus is to provide an oxygen supply system which is easier to maintain and less complex in monitoring.

This and other objects are solved by an oxygen supply system having the features of claim 1 and an aircraft having the features of claim 10.

According to a first aspect of the invention, an oxygen supply system having the features of claim 1 is provided. According to a third aspect of the invention, an aircraft, in particular a passenger aircraft, may comprise an oxygen supply system. The aircraft may in some embodiments include an oxygen supply system installed in a passenger cabin of the aircraft, for example as a line-replaceable unit (LRU). It may also be possible to combine functions according to the first aspect and the second aspect in a single unit.

One of the ideas of the present invention is to test oxygen supply systems with an electrically operated release mechanism type by ensuring that an electric current may flow through important electric components within the oxygen supply system. With the suggested improvements in the oxygen supply systems, the maintenance lead times for aircraft in service and new aircraft in production, as well as the related costs may be drastically lowered. The provision of a signaling means external to the oxygen supply systems allows for monitoring and testing, particularly remote testing, of the whole system and/or single components thereof.

The status of the oxygen supply systems may be easily and continuously monitored and communicated to maintenance and service personnel.

A particular advantage of the oxygen supply system of the invention is the ease of installation which will not require substantial changes to the harness design. Individual connections of the oxygen control boxes are not necessarily needed, thus saving weight for the harness. Furthermore, the need for complicated locking and latching systems including test latch functionality may be avoided as well. Locks and latches with a reduced number of mechanical components may be used so that weight may be advantageously saved. In particular, the commonly employed manual latch for testing may be omitted, while the electrically operated type of latch remains in use.

One other idea of the invention is to monitor the state of a thermal fuse that is connected in series to a function tester. Such integration of a thermal fuse in a surveillance circuit advantageously allows for detecting inadvertently burnt gas generators during testing as these are producing heat during operation. Thermal fuses that include fusible links will interrupt any electric current flowing through the fuse. Thus, a faulty fuse will present an open circuit to any applied voltage. The provision of an electrically operated signaling means external to the oxygen supply systems allows for monitoring and testing, particularly remote testing, of the whole system and/or single components thereof. The status of the oxygen supply systems may be easily and continuously monitored and communicated to maintenance and service personnel. The application of a thermal fuse may be limited to the usage with an oxygen generator that generates heat whilst producing oxygen. For other types of oxygen supply, the thermal fuse might not be applicable.

Advantageous variations and developments may be gathered from the dependent claims as well as from the description in conjunction with the drawings.

According to some embodiments, the function tester may comprise a shunting device connected in parallel to a signaling device. In some embodiments, the shunting device may comprise a shunt resistor. In some embodiments, the signaling device may comprise a light emitting diode.

According to some embodiments, the oxygen supply system may further comprise a system controller coupled to the energy supply and configured to send control signals over a control signal line to the energy supply for high and low levels of energy as needed for testing scenarios and emergency release purposes.

According to some embodiments, the oxygen supply system may further comprise an oxygen generator configured to supply oxygen to the oxygen supply equipment. As second object, a thermal fuse that is connected in series to the tester may be integrated in a manner that inadvertently burnt gas generators may be detected during testing.

### BRIEF DESCRIPTION OF THE DRAWINGS

The invention will be explained more detailed with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates an oxygen supply system according to an embodiment.
Fig. 2 schematically illustrates an oxygen supply system according to another embodiment.
Fig. 3 schematically illustrates an oxygen supply system according to a further embodiment.
Fig. 4 schematically illustrates an aircraft including an oxygen supply system according to yet another embodiment.

### DETAILED DESCRIPTION OF EMBODIMENTS OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

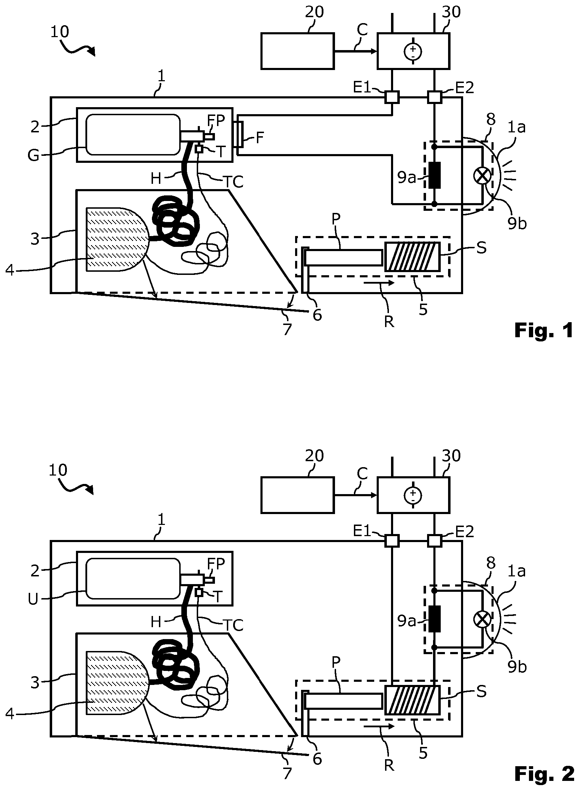

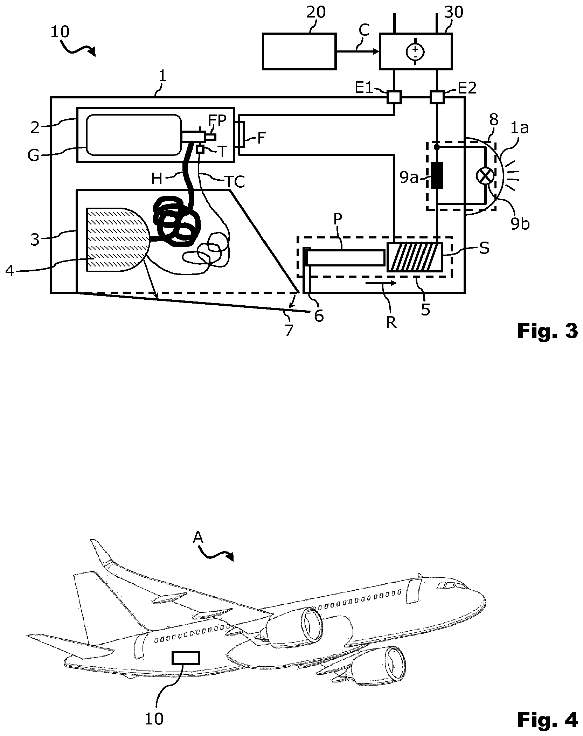

Figs. 1, 2 and 3 schematically illustrate block diagrams of oxygen supply systems 10 for use in an aircraft, such as for example the aircraft A as depicted in Fig. 4. The oxygen supply system 10 may for example be a supplementary oxygen supply system 10 installed in the passenger cabin of a passenger aircraft. The oxygen supply system 10 may be implemented as a line-replaceable unit (LRU) that may be designed to specifications assuring ease of interchangeability, attachment and mountability. The oxygen supply system 10 may be equipped with standardized connections for rapid mechanical mounting, data communication, power supply and grounding. The oxygen supply system 10 may be implemented in concordance with a Design Assurance Level C or a Design Assurance Level B according to the RTCA SC-167 guidelines DO-178B.

The oxygen supply system 10 may generally include oxygen supply equipment 4, such as oxygen masks for the passengers that are provided at various locations in an aircraft, for example above the passenger seats, in the toilets, at the stations of the flight crew and in the galleys of the aircraft. Oxygen supply for the passengers may be provided in one or more of different ways: For example, the oxygen for the passengers may be produced by chemical oxygen generators G. The oxygen generators G may be connected to the masks 4 via flexible hoses H. Alternatively or additionally to the use of oxygen generators G, the oxygen may also be stored in oxygen cylinders and delivered as required, the source of which oxygen may be generally denoted as oxygen supply source U. The masks 4 may be additionally connected to a trigger interface T of the oxygen generator G or oxygen supply source U by a trigger cord TC.

With flap released and opened, a passenger or crew member of the aircraft A desiring to use the oxygen supply system may pull one of the masks 4 towards himself/herself, thus pulling on the trigger cord TC and activating the oxygen generator G via the trigger interface T. For example, the trigger interface T may comprise a safety pin that blocks or secures a firing pin FP in an inactive position, the activation of which firing pin FP may activate chemical oxygen generation within the oxygen generator G or may open a valve of an oxygen tank or cylinder of an oxygen supply source U. The safety pin may for example be pulled out of its blocking position when a user of the oxygen supply system 10 pulls on the trigger cord TC. Then, the firing pin FP will be released and trigger activation of the oxygen supply of the mask 4. Nevertheless, the oxygen supply system 10 does not necessarily need to be activated by pulling the trigger cord TC only but may be activated by other means in order to provide oxygen to the user.

Irrespective of how the oxygen supply to the passengers is ensured, the oxygen supply provided by the oxygen supply system 10 may in emergency cases or under exceptional flight circumstances be activated either manually, e.g., from the cockpit, or automatically, for example if the pressure in the cabin drops to a predetermined limit value. The limit value may, for example, be comparable to the pressure at an altitude of about 14.500±500 feet.

For deployment of the oxygen supply equipment 4, the oxygen supply system 10 may be installed in a container with a container housing, generally indicated with the reference sign 1. The space in which the oxygen masks for the passengers are stored may also be referred to as an oxygen (mask) container 3 which is closed off to the outside with a container door 7 or flap. The container door 7 may open to the outside (indicated by the arrow) and may be secured under normal conditions by a corresponding latch 6. The activation of the oxygen supply equipment 4 may, for example, be automatically or manually initiated. As soon as the oxygen supply is activated, the container door 7 of the container housing 1 is opened and the oxygen masks 4 of the oxygen supply equipment may fall out. At the moment when the passengers have pulled the masks towards them, the oxygen supply is triggered, that is to say for example the oxygen generators G are started or the oxygen in the oxygen supply source U is released.

The oxygen generator G itself may be monitored with a thermal fuse F. The thermal fuse F may be attached to a generator housing 2 in which the oxygen generator G is housed or to the oxygen generator G directly. In either case, the thermal fuse F may act as a cutoff including a one-way fusible link. The thermal fuse F interrupts electric current flowing through the fuse when the fusible link therein is heated up to a specific trigger temperature. When oxygen generation is inadvertently started, the production of oxygen generates enough heat for the oxygen generator G and/or the generator housing 2 to heat up considerably. Particularly, the thermal fuse F will be blown upon this heat generation and will no longer let electric current flow through the fuse F.

As exemplarily shown in Fig. 1, the oxygen supply system 10 may comprise two energy supply interfaces E1 and E2 between which an electric supply voltage may be applied. The supply voltage may for example be a DC voltage provided by an energy supply 30 coupled to the supply interfaces E1 and E2 of the oxygen supply system 10. The thermal fuse F may be connected in series between the energy supply interfaces E1 and E2.

For purposes of testing whether or not the thermal fuse F has been prematurely blown due to the oxygen generator G having accidentally been set off, a function tester, generally indicated with the reference numeral "8", may be used. The function tester 8 is coupled in series with the thermal fuse F between the supply interfaces E1 and E2. When the thermal fuse F has not been blown, i.e. when the fusible link of the thermal fuse F has not been cutoff yet, electric current will flow through the thermal fuse F.

As exemplarily illustrated in Fig. 1, the function tester 8 may be formed with a shunting device 9a connected in parallel to a signaling device 9b. The shunting device 9a may for example be a shunt resistor 9a that is able to carry the larger part of the current flowing through the function tester 8. The signaling device 9b may for example be a light emitting diode (LED) or any other lamp that may be arranged outside the container housing 1 and may for example be covered by a lamp cover 1a. It also is feasible to use an audio signaling device, such as a loudspeaker or a signal horn for remote positions like crew rest compartments or monuments as signaling device 9b. If a non-zero test current flows through the function tester 8, the signaling device 9b will light up and visually indicate full functionality and operability of the oxygen generator G to a test witness. If, on the other hand, the current flowing through the function tester 8 is essentially zero due to a high temperature fault in the thermal fuse F, the signaling device 9b will not light up. Maintenance or service staff members checking on multiple oxygen supply systems 10 installed in an aircraft will thus be able to walk through the aisles, look at the signaling devices 9b and be able to quickly identify any faulty oxygen supply systems 10 for which the signaling devices 9b will not be lit. Quick identification of inadvertently burnt oxygen generators G in service of aircraft may thus be advantageously enabled.

The oxygen supply system 10 may further comprise an electromechanical actuator 5 as latch controller. The electromechanical actuator 5 is coupled to the latch 6 and is configured to control the latch 6 to releasable open the container door 7. The container door 7 of the container housing 1 is normally kept closed by the electrically operated latch 6 and a corresponding lock (not explicitly illustrated). The electromechanical actuator 5 may for example comprise a solenoid S that includes an electromagnetically inductive coil which is wound at least partially around an armature. The coil of the solenoid S may be shaped such that upon a current flowing through the windings of the coil the armature may alter the electromagnetic field in the vicinity of the solenoid S, thereby enacting magnetic forces of various strength on nearby magnetic materials.

The electromechanical actuator 5 may further comprise a latch plunger P made at least partially of magnetic material and arranged such that a change in the electromagnetic field produced by the solenoid S attracts or repels the latch plunger P. Thus, the electromechanical actuator 5 may convert an electric current flowing through the solenoid S into a mechanical actuation of the latch plunger P. Upon exceeding a predefined unlatching threshold for the electric current, the electromagnetic force exerted on the latch plunger P is strong enough to pull the latch plunger P from the latch 6 (as exemplarily indicated with the reference sign "R"), thereby unlocking and unlatching the latch 6.

As exemplarily illustrated in Fig. 2, electric current for the operation of the electromechanical actuator 5 may be provided to the oxygen supply system 10 via two supply interfaces E1 and E2 between which an electric supply voltage may be applied. The supply voltage may for example be a DC voltage provided by an energy supply 30 coupled to the supply interfaces E1 and E2 of the oxygen supply system 10.

The energy supply 30 is configured to deliver electric supply voltages of various voltage levels. For example, the energy supply 30 may in a first operational state be configured to apply a voltage of, for example, 115 VDC to the supply interfaces E1 and E2, causing an electric current of, for example, 5A to flow through the solenoid S of the electromechanical actuator 5. This electric current may in particular be above the unlatching threshold so that the first operational state may be referred to as emergency release state in which actual release of the oxygen supply equipment is in fact desired and required.

In a second operational state, the energy supply 30 may be configured to apply a (reduced) voltage of, for example, 6 VDC to the supply interfaces E1 and E2, causing a (reduced) electric current of, for example, 500mA to flow through the solenoid S of the electromechanical actuator 5. This (reduced) electric current may in particular be below the unlatching threshold so that the second operational state may be referred to as test activation state in which actual release of the oxygen supply equipment is neither desired nor required, but in which the electric functionality of components of the oxygen supply system 10 is to be subject to a test.

For purposes of testing the functionality of the electromechanical actuator 5 a function tester, generally indicated with the reference numeral "8", may be used. The function tester 8 is coupled in series with the electromechanical actuator 5 between the supply interfaces E1 and E2. When the electric components of the electromechanical actuator 5 are functional, current will flow through the electromechanical actuator 5, producing a magnetic force for a flap release.

If the coil is in a generally operable and fully functional state, an electric current of known strength will flow through the coil when a predefined supply voltage is applied by the energy supply 30 to the supply interfaces E1 and E2. On the other hand, if the coil of the solenoid S is blown or otherwise faulty, with a predefined supply voltage being applied by the energy supply 30 to the supply interfaces E1 and E2, the current flowing through the blown or faulty coil will be essentially zero.

During the second operational state, i.e. the test activation state of the electromechanical actuator 5, the function tester 8 will thus either be energized by the flowing current, if the coil is generally operable and fully functional, or not energized due to no current flowing because of the blown or faulty coil. The function tester 8 will therefore be able to identify a fault in the electromechanical actuator 5 depending on whether a non-zero current will flow through the function tester 8 or not.

As exemplarily illustrated in Fig. 2, the function tester 8 may be formed with a shunting device 9a connected in parallel to a signaling device 9b. The shunting device 9a may for example be a shunt resistor 9a that is able to carry the larger part of the current flowing through the function tester 8. The signaling device 9b may for example be a light emitting diode (LED) or any other lamp that may be arranged outside the container housing 1 and may for example be covered by a lamp cover 1a. It also is feasible to use a loudspeaker or signal horn for remote positions like crew rest compartments or monuments as signaling device 9b. If a non-zero test current flows through the function tester 8 in the second operational state, the signaling device 9b will light up and visually indicate full functionality and operability of the electromechanical actuator 5 to a test witness. If, on the other hand, the current flowing through the function tester 8 is essentially zero, the signaling device 9b will not light up. Maintenance or service staff members checking on multiple oxygen supply systems 10 installed in an aircraft will thus be able to walk through the aisles, look at the signaling devices 9b and be able to quickly identify any faulty oxygen supply systems 10 for which the signaling devices 9b will not be lit.

While the oxygen supply system 10 of Fig. 1 is configured with a function tester 8 to test the functionality of the oxygen generator G by testing the operability of the thermal fuse F and the oxygen supply system 10 of Fig. 2 is configured with a function tester 8 to test the functionality of the latch 6 by testing the operability of the electromechanical actuator 5, it may of course be possible to combine both testing modes in a single unit. Such a system architecture for an oxygen supply system 10 is exemplarily depicted in Fig. 3.

As shwon in Fig. 3, it may be possible to have both the thermal fuse F as well as the solenoid S of the electromechanical actuator 5 be connected in series with the function tester 8. In such a system, either one of the thermal fuse F and the solenoid S being faulty will trigger the function tester 8 to indicate a fault by means of the signaling device 9b. While it is generally not possible to determine from the outside which of the devices (thermal fuse F or solenoid S) caused the fault, safety of the system 10 overall will be guaranteed and further inspection of the system 10 in question may reveal the exact cause of the fault.

The oxygen supply systems 10 of Fig. 1, 2 and 3 may further include a system controller 20 coupled to the energy supply 30 and configured to send control signals over a control signal line C to the energy supply 30. Those control signals may be used to cause the energy supply to operate either in the first or the second operational state, i.e. either in the emergency release state or in the test activation state. The system controller 20 may for example be part of a control network on-board of the aircraft and may for example be remotely controlled by crew members, the cockpit crew or maintenance personnel.

In the foregoing detailed description, various features are grouped together in one or more examples or examples with the purpose of streamlining the disclosure. It is to be understood that the above description is intended to be illustrative, and not restrictive.

Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### LIST OF REFERENCE NUMERALS

- 1: Container housing
- 1a: Lamp cover
- 2: Housing of oxygen generator or other oxygen supply sources
- 3: Oxygen mask container
- 4: Oxygen supply equipment
- 5: Electromechanical actuator
- 6: Latch
- 7: Container door
- 8: Function tester
- 9a: Shunt device
- 9b: Signaling device
- 10: Oxygen supply system
- 20: System controller
- 30: Energy supply
- A: Aircraft
- C: Control signal line
- E1: Supply interface
- E2: Supply interface
- F: Thermal fuse
- FP: Firing pin
- G: Oxygen generator
- H: Oxygen hose
- P: Latch plunger
- R: Latch plunger actuation movement
- S: Solenoid
- T: Trigger pin
- TC: Trigger cord
- U: Oxygen supply source

## Claims

1. Oxygen supply system (10), comprising:
a container housing (1) having a container door (7);
oxygen supply equipment (4) held within the container housing (1) and
configured to be released through the container door (7);
an electromechanical actuator (5) coupled to a latch (6) of the container door (7) and configured to actuate the latch (6) to releasable open the container door (7); and
a function tester (8) coupled in series to the electromechanical actuator (5) and configured to test the functionality and operability of the electromechanical actuator (5) and to signal a result of the test to a user, wherein the electromechanical actuator (5) comprises a solenoid (S) that includes an electromagnetically inductive coil which is wound at least partially around an armature, wherein the coil of the solenoid (S) is shaped such that upon a current flowing through the windings of the coil the armature alters the electromagnetic field in the vicinity of the solenoid (S), and the oxygen supply system (10) further comprising:
an energy supply (30) coupled to supply interfaces (E1, E2) of the oxygen supply system (10) and configured to provide an electric supply voltage of various voltage levels to the electromechanical actuator (5), wherein the energy supply (30) is configured in a first operational state to apply a voltage of a first voltage level to the supply interfaces which causes an electric current of a first current level to flow through the solenoid (S) of the electromechanical actuator (5), the first current level being above an unlatching threshold for unlocking and unlatching the latch (6) by the electromechanical actuator (5), and wherein the energy supply (30) is configured in a second operational state to apply a voltage of a second voltage level to the supply interfaces which causes an electric current of a second current level to flow through the solenoid (S) of the electromechanical actuator (5), the second current level being below an unlatching threshold for unlocking and unlatching the latch (6) by the electromechanical actuator (5), **characterized in that** the electromechanical actuator (5) further comprises a latch plunger (P) made at least partially of magnetic material and arranged such that a change in the electromagnetic field produced by the solenoid (S) attracts or repels the latch plunger (P).

2. Oxygen supply system (10) according to claim 1, the function tester (8) comprising a shunting device (9a) connected in parallel to a signaling device (9b).

3. Oxygen supply system (10) according to claim 2, wherein the shunting device (9a) comprises a shunt resistor and the signaling device (9b) comprises one or more of a light emitting diode, a lamp and a loudspeaker.

4. Oxygen supply system (10) according to one of the claims 1 to 3, further comprising:
a system controller (20) coupled to the energy supply (30) and configured to send control signals over a control signal line (C) to the energy supply (30).

5. Oxygen supply system (10) according to any of the preceding claims, further comprising:
an oxygen generator (G) held in a generator housing (2) and configured to supply oxygen to the oxygen supply equipment (4);
a thermal fuse (F) attached to the oxygen generator (G) or the generator housing (2), the thermal fuse (F) having a fusible link which blows upon exceeding a predefined fusing temperature; and
a function tester (8) coupled in series to the thermal fuse (F) and configured to test whether the fusible link of the thermal fuse (F) is blown and to signal a result of the test to a user.

6. Oxygen supply system (10) according to claim 5, wherein the thermal fuse (F) comprises a one-way fusible link designed to cutoff electric current when blown.

7. Oxygen supply system (10) according to one of the claims 5 and 6, the function tester (8) comprising a shunting device (9a) connected in parallel to a signaling device (9b).

8. Oxygen supply system (10) according to claim 7, wherein the shunting device (9a) comprises a shunt resistor and the signaling device (9b) comprises a light emitting diode.

9. Aircraft (A), in particular passenger aircraft, comprising an oxygen supply system (10) according to one of the claims 1 to 8.

10. Aircraft (A) according to claim 9, wherein the oxygen supply system (10) is implemented as a line-replaceable unit, LRU.

## Patentansprüche

1. Sauerstoffversorgungssystem (10), umfassend:
ein Behältergehäuse (1) mit einer Behältertür (7),
eine Sauerstoffversorgungseinrichtung (4), die innerhalb des Behältergehäuses (1) gehalten wird und so konfiguriert ist, dass sie durch die Behältertür (7) freigegeben wird,
einen elektromechanischen Aktuator (5), der mit einem Riegel (6) der Containertür (7) gekoppelt und so konfiguriert ist, dass er den Riegel (6) betätigt, um die Containertür (7) lösbar zu öffnen; und
einen Funktionstester (8), der in Reihe mit dem elektromechanischen Aktuator (5) gekoppelt und so konfiguriert ist, dass er die Funktionalität und Betriebsfähigkeit des elektromechanischen Aktuators (5) testet und ein Ergebnis des Tests an einen Benutzer signalisiert,
wobei der elektromechanische Aktor (5) einen Elektromagneten (S) umfasst, der eine elektromagnetisch induktive Spule umfasst, die zumindest teilweise um einen Anker gewickelt ist, wobei die Spule des Solenoids (S) so geformt ist, dass bei einem durch die Wicklungen der Spule fließenden Strom der Anker das elektromagnetische Feld in der Umgebung des Solenoids (S) verändert, und
das Sauerstoffversorgungssystem (10) ferner umfasst:
eine Energieversorgung (30), die mit Versorgungsschnittstellen (E1, E2) des Sauerstoffversorgungssystems (10) gekoppelt und so konfiguriert ist, dass sie dem elektromechanischen Aktuator (5) eine elektrische Versorgungsspannung mit verschiedenen Spannungspegeln zuführt, wobei die Energieversorgung (30) in einem ersten Betriebszustand so konfiguriert ist, dass sie eine Spannung eines ersten Spannungspegels an die Versorgungsschnittstellen anlegt, die bewirkt, dass ein elektrischer Strom eines ersten Strompegels durch den Elektromagneten (S) des elektromechanischen Aktuators (5) fließt, wobei der erste Strompegel oberhalb einer Entriegelungsschwelle zum Entriegeln und Entriegeln der Verriegelung (6) durch den elektromechanischen Aktuator (5) liegt, und wobei die Energieversorgung (30) in einem zweiten Betriebszustand konfiguriert ist, um eine Spannung eines zweiten Spannungspegels an die Versorgungsschnittstellen anzulegen, die bewirkt, dass ein elektrischer Strom eines zweiten Strompegels durch die Magnetspule (S) des elektromechanischen Aktuators (5) fließt, wobei der zweite Strompegel unterhalb einer Entriegelungsschwelle zum Entriegeln und Entriegeln des Riegels (6) durch den elektromechanischen Aktuator (5) liegt, **dadurch gekennzeichnet, dass** der elektromechanische Aktuator (5) ferner einen Riegelstößel (P) umfasst, der zumindest teilweise aus magnetischem Material besteht und so angeordnet ist, dass eine Änderung des durch den Solenoid (S) erzeugten elektromagnetischen Feldes den Riegelstößel (P) anzieht oder abstößt.

2. Sauerstoffversorgungssystem (10) nach Anspruch 1, wobei der Funktionstester (8) eine Überbrückungseinrichtung (9a) umfasst, die parallel zu einer Signaleinrichtung (9b) geschaltet ist.

3. Sauerstoffversorgungssystem (10) nach Anspruch 2, wobei die Nebenschlusseinrichtung (9a) einen Nebenschlusswiderstand umfasst und die Signalisierungseinrichtung (9b) eine oder mehrere von einer Leuchtdiode, einer Lampe und einem Lautsprecher umfasst.

4. Sauerstoffversorgungssystem (10) nach einem der Ansprüche 1 bis 3, ferner umfassend eine Systemsteuerung (20), die mit der Energieversorgung (30) gekoppelt und so konfiguriert ist, dass sie Steuersignale über eine Steuersignalleitung (C) an die Energieversorgung (30) sendet.

5. Sauerstoffversorgungssystem (10) nach einem der vorhergehenden Ansprüche, ferner umfassend:
einen Sauerstoffgenerator (G), der in einem Generatorgehäuse (2) gehalten wird und so konfiguriert ist, dass er Sauerstoff an die Sauerstoffversorgungseinrichtung (4) liefert;
eine Thermosicherung (F), die an dem Sauerstoffgenerator (G) oder dem Generatorgehäuse (2) angebracht ist, wobei die Thermosicherung (F) einen Schmelzeinsatz aufweist, der bei Überschreiten einer vordefinierten Schmelztemperatur durchbrennt; und
einen Funktionstester (8), der in Reihe mit der Thermosicherung (F) gekoppelt und so konfiguriert ist, dass er prüft, ob der Schmelzeinsatz der Thermosicherung (F) durchgebrannt ist, und dass er einem Benutzer ein Ergebnis der Prüfung signalisiert.

6. Sauerstoffversorgungssystem (10) nach Anspruch 5, wobei die Thermosicherung (F) einen Einweg-Schmelzeinsatz umfasst, der so ausgelegt ist, dass er den elektrischen Strom unterbricht, wenn er durchbrennt.

7. Sauerstoffversorgungssystem (10) nach einem der Ansprüche 5 und 6, wobei der Funktionstester (8) eine Überbrückungsvorrichtung (9a) umfasst, die parallel zu einem Signalisierungsgerät (9b) geschaltet ist.

8. Sauerstoffversorgungssystem (10) nach Anspruch 7, wobei die Nebenschlusseinrichtung (9a) einen Nebenschlusswiderstand und die Signalisierungseinrichtung (9b) eine Leuchtdiode umfasst.

9. Luftfahrzeug (A), insbesondere Passagierflugzeug, mit einem Sauerstoffversorgungssystem (10) nach einem der Ansprüche 1 bis 8.

10. Luftfahrzeug (A) nach Anspruch 9, wobei das Sauerstoffversorgungssystem (10) als Line-Replaceable-Unit, LRU, implementiert ist.

## Revendications

1. Système d'alimentation en oxygène (10), comprenant:
un boîtier de conteneur (1) ayant une porte de conteneur (7) ;
un équipement d'alimentation en oxygène (4) maintenu à l'intérieur du logement du conteneur (1) et configuré pour être libéré par la porte du conteneur (7) ;
un actionneur électromécanique (5) couplé à un loquet (6) de la porte du conteneur (7) et configuré pour actionner le loquet (6) pour ouvrir la porte du conteneur (7) de manière libérable ; et
un testeur de fonctionnement (8) couplé en série à l'actionneur électromécanique (5) et configuré pour tester la fonctionnalité et l'opérabilité de l'actionneur électromécanique (5) et pour signaler le résultat du test à un utilisateur,
dans lequel l'actionneur électromécanique (5) comprend un solénoïde (S) qui comprend une bobine électromagnétique inductive qui est enroulée au moins partiellement autour d'un induit,
dans lequel la bobine du solénoïde (S) est formée de telle sorte que, lorsqu'un courant circule dans les enroulements de la bobine, l'induit modifie le champ électromagnétique au voisinage du solénoïde (S), et
le système d'alimentation en oxygène (10) comprenant en outre :
une alimentation en énergie (30) couplée aux interfaces d'alimentation (E1, E2) du système d'alimentation en oxygène (10) et configurée pour fournir une tension d'alimentation électrique de différents niveaux de tension à l'actionneur électromécanique (5), dans lequel l'alimentation en énergie (30) est configurée dans un premier état de fonctionnement pour appliquer une tension d'un premier niveau de tension aux interfaces d'alimentation qui fait circuler un courant électrique d'un premier niveau de courant à travers le solénoïde (S) de l'actionneur électromécanique (5), le premier niveau de courant étant supérieur à un seuil de déverrouillage pour déverrouiller et déverrouiller le verrou (6) par l'actionneur électromécanique (5), et dans lequel l'alimentation en énergie (30) est configurée dans un second état de fonctionnement pour appliquer une tension d'un second niveau de tension aux interfaces d'alimentation qui fait circuler un courant électrique d'un second niveau de courant à travers le solénoïde (S) de l'actionneur électromécanique (5), le second niveau de courant étant inférieur à un seuil de déverrouillage pour déverrouiller et déverrouiller le verrou (6) par l'actionneur électromécanique (5), **caractérisé en ce que** l'actionneur électromécanique (5) comprend en outre un plongeur de verrou (P) réalisé au moins partiellement en matériau magnétique et agencé de telle sorte qu'une modification du champ électromagnétique produit par le solénoïde (S) attire ou repousse le plongeur de verrou (P).

2. Système d'alimentation en oxygène (10) selon la revendication 1, le testeur de fonctionnement (8) comprenant un dispositif de dérivation (9a) connecté en parallèle à un dispositif de signalisation (9b).

3. Système d'alimentation en oxygène (10) selon la revendication 2, dans lequel le dispositif de dérivation (9a) comprend une résistance de dérivation et le dispositif de signalisation (9b) comprend un ou plusieurs éléments parmi une diode électroluminescente, une lampe et un haut-parleur.

4. Système d'alimentation en oxygène (10) selon l'une des revendications 1 à 3, comprenant en outre :
un contrôleur de système (20) couplé à l'alimentation en énergie (30) et configuré pour envoyer des signaux de commande par une ligne de signaux de commande (C) à l'alimentation en énergie (30).

5. Système d'alimentation en oxygène (10) selon l'une des revendications précédentes, comprenant en outre
un générateur d'oxygène (G) maintenu dans un boîtier de générateur (2) et configuré pour fournir de l'oxygène à l'équipement d'alimentation en oxygène (4) ;
un fusible thermique (F) fixé au générateur d'oxygène (G) ou au boîtier du générateur (2), le fusible thermique (F) ayant une liaison fusible qui saute lorsqu'il dépasse une température de fusion prédéfinie ; et
un testeur de fonctionnement (8) couplé en série au fusible thermique (F) et configuré pour tester si la liaison fusible du fusible thermique (F) est grillée et pour signaler un résultat du test à un utilisateur.

6. Système d'alimentation en oxygène (10) selon la revendication 5, dans lequel le fusible thermique (F) comprend un lien fusible unidirectionnel conçu pour couper le courant électrique lorsqu'il saute.

7. Système d'alimentation en oxygène (10) selon l'une des revendications 5 et 6, le testeur de fonctionnement (8) comprenant un dispositif de dérivation (9a) connecté en parallèle à un dispositif de signalisation (9b).

8. Système d'alimentation en oxygène (10) selon la revendication 7, dans lequel le dispositif de dérivation (9a) comprend une résistance de dérivation et le dispositif de signalisation (9b) comprend une diode émettrice de lumière.

9. Aéronef (A), en particulier avion de passagers, comprenant un système d'alimentation en oxygène (10) selon l'une des revendications 1 à 8.

10. Aéronef (A) selon la revendication 9, dans lequel le système d'alimentation en oxygène (10) est mis en oeuvre sous la forme d'une unité remplaçable en ligne, LRU.
